(19) Europäisches Patentamt
European Patent Office
Office européen des brevets

(11) Publication number: 0 326 230 A2

# (12) EUROPEAN PATENT APPLICATION

(21) Application number: 89200191.8

(22) Date of filing: 27.01.89

(51) Int. Cl.4: C09D 5/03 , C09D 3/58 , C08G 59/68

(30) Priority: 29.01.88 US 150167

(43) Date of publication of application: 02.08.89 Bulletin 89/31

(84) Designated Contracting States: AT BE CH DE ES FR GB GR IT LI NL SE

(71) Applicant: STAMICARBON B.V.
Mijnweg 1
NL-6167 AC Geleen(NL)

(72) Inventor: Pappas, S.Peter
North Dakota State Univ. Polymers and Coatings Dep
Fargo ND 58105-5516(US)

## (54) Powder coating composition.

(57) The invention relates to a latent catalyst for epoxy resin containing compounds according to formula 1

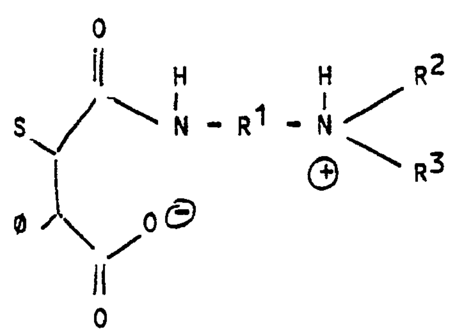

(1)

in which:
$R^1 = C_1$-$C_{10}$ alkyl or aryl
$R^2$ and $R^3$ are the same or different $C_1$-$C_6$ alkyl, $C_6$-$C_8$ aryl or $R^2$ and $R^3$ form together a 4-8 membered ring
in which:
$R^1$, $R^2$ and/or $R^3$ can contain an ether-oxygen or sulphur atom and in which:
S and ø are hydrogen or an aliphatic or an aromatic group.

EP 0 326 230 A2

# POWDER COATING COMPOSITION

The invention relates to a powder coating composition comprising epoxy resin, acid groups containing polyester and a catalyst.

Epoxy-acid reactions are well known in the art (see US-A 4147737). An important use of epoxy-acid reactions is in the field of the preparation of epoxy-polyester powdercoatings. Those powders are applied at -for instance- steel plate at room temperature and cured at high temperature (140-220¤C). In order to get a smooth continuous coating it is prerequisite that the powder particles show a good storage stability and that after application, they melt and flow, before the curing reaction proceeds too far. On the other hand the curing reaction has to be as fast as possible in order to shorten the production process. Hence, there exist a need for powder coatings with latent catalyst systems, that do not show curing activity up to 100-120¤C and are very active in curing above 120¤C.

The invention provides a solution to this problem.

The powder coating comprising epoxy resin, acid groups containing polyester and a catalyst is characterized in that the catalyst is a latent catalyst of formula (1):

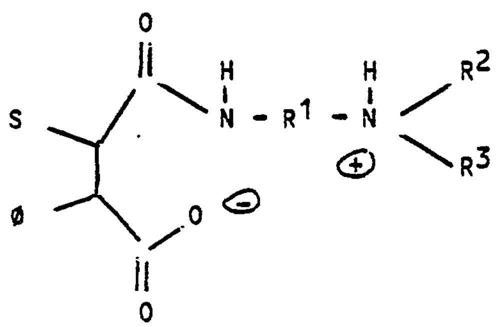

(1)

in which:
R' = $C_1$-$C_{10}$ alkyl or aryl,
$R^2$ and $R^3$ are the same or different $C_1$-$C_6$ alkyl, $C_6$-$C_8$ aryl or $R^2$ and $R^3$ form together a 4-8 membered carbon ring,
in which:
R', $R^2$ and/or $R^3$ can contain an ether-oxygen or sulphur atom and in which:
S and Q are hydrogen or an aliphatic or an aromatic group.

Between a temperature of 100¤C and 120¤C the amide will form with the carboxyl group an imide group releasing a water molecule. During this reaction the proton on the quaternary nitrogen is liberated and the tertiary amine can perform its catalytic activity.

The invention is also embodied in a powder coating with as catalyst a catalyst with formula (2):

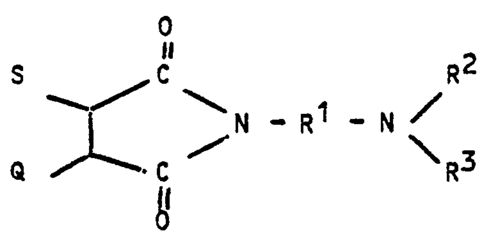

(2)

in which:
R', $R^2$ and $R^3$ have the above mentioned meanings and in which:
S and Q are hydrogen or an aliphatic or an aromatic group.

In formula (1) and in formula (2) $R^1$ is preferably a $C_2$-$C_4$ alkyl or a fenyl group, whereas $R^2$ and $R^3$ are preferably $C_1$-$C_4$ alkyl or form together a 5 or 6 membered carbon ring.

S and Q contain preferably 0 to 12 carbon atoms, more in particular 4-10 carbon atoms. Preferably S and Q form together a cyclic group, either aliphatic, ethylenically unsaturated or aromatic.

The latent catalyst can be prepared by reacting a compound containing an alpha,beta-diacid group or

derivative thereof, preferably an anhydride group with an N,N-substituted-diamine, the substituents being $R^2$ and $R^3$.

The diacid can be e.g. phthalic acid anhydride, tetrahydrophthalic acid anhydride, acid benzene, tetracarboxylic dianhydride, maleic acid anhydride, trimeliticacid anhydride, cyclohexanedicarboxylic-acid anhydride, or tetracarboxylic naphthalene-di-anhydride.

As $R^1$ ethyl, propyl, 1,4-fenyl, butyl, cyclohexyl or cyclopentyl can be chosen.

As $R^2$ and $R^3$ methyl, ethyl, propyl, iso-propyl, n-butyl, isobutyl, t-butyl, benzyl or fenyl can be chosen, or they can form together a ring structure like e.g. cyclopentyl, cyclohexyl or morpholinyl.

The latent catalyst can be mixed with resins like bisphenol-A based epoxys, triglycidyl isocyanurate and other epoxys, together with acid group containing oligomers or polyesters. The polyester resins are preferably based on aromatic carboxylic acids like iso- and terephthalic acids and aliphatic glycols like neopentylglycol, propylene glycol, butanediol and the like. Preferably the polyester has an acid number between 10-100 mg KOH/g polyester. Some trifunctional monomers can be used in a limited amount, e.g. trimethylolpropane, trimelitic acid anhydride and the like.

The epoxy resin, the polyester resin, the catalyst and the usual additives in powder coating system are generally melt-mixed in an extruder, cooled and ground to a fine powder, that can be applied as powder coating.

As additives especially colourants, UV-stabilizers, flow additives and anti-foaming agents can be mentioned.

The powder coating has good curing characteristics and a long shelf-live, even if high amounts of latent catalysts are used.

The invention will be further elucidated by the examples, without being limited thereto.

Examples 1-8: Latent catalysts synthesis

Example 1

Dimethylaminopropylamine-phthalic acid anhydride adduct.

Dimethylaminopropylamine (DMP) (0.44 ml) (0.005 mol plus 4 % excess, 0.02 ml) in 5 ml acetonitrile was added dropwise, at room temperature under a nitrogen purge, to a stirred solution of phthalic anhydride (PA) (0.442 gr) (0.005 mol) in 25 ml acetonitrile. A fine white precipitate formed immediately. It was stirred at room temperature for one hour and then placed in the refrigerator overnight. The product was filtered, washed with cold acetonitrile and dried under vacuum for two days to yield 0.785 gr. The product became shiny and shrank at 114¤C with bubbles forming at 118¤C. At 146¤C the product began to melt with a clear melt obtained at 154¤C.

Example 2

Dimethylaminoethyleneamine-phthalic acid anhydride adduct.

The synthesis was carried out as described in Example 1 with phthalic anhydride and dimethylaminoethylamine (DME) (1 : 1 plus 4 % mol ratio). A precipitate formed ten minutes after all the amine was added. The product shrank at 132¤C, at 133, 34¤C small bubbles formed and a clear melt was obtained.

Example 3

Diethylaminoethylamine-phthalic acid anhydride adduct.

The synthesis was carried out as in Example 1 using phthalic anhydride and diethylaminoethylamine

(DEE) (1 : 1 plus 4 % excess mol ratio) in both 1,2-dichloroethane and acetonitrile. In both cases an oil was produced and after two months in a refrigerator crystals are starting to form.

Example 4

Diethylaminopropylamine-phthalic acid anhydride adduct.

The synthesis was carried out as in Example 1 using phthalic anhydride and diethylaminopropylamine (DEP) (1 : 1 plus 4 % excess mol ratio) in 1,2-dichloroethane. A white precipitate formed after the solution was allowed to sit overnight in a refrigerator and the flask scratched. At 146¤C bubbles form in the product and a clear melt occurred at 149¤C. No observable shrinkage occured prior to melting.

Example 5

Aminopropylmorpholine-phthalic acid anhydride adduct.

The synthesis was cacried out as in Example 1 using phthalic anhydride and 4(3-aminopropyl)-morpholine (Dmorph) (1 : 1 plus 4 % excess mol ratio) in 1,2-dichloroethane. A fine white precipitate formed ten minutes after all of the amine was added. The product shrank slightly at 140¤C and turned pink at 142¤C. As the temperature was raised, the colour became redder. At 146¤C shrinking increased and a red clear melt with bubble formation occurred at 147¤C.

Example 6

Dimethylphenylene-phthalic acid anhydride adduct.

The synthesis was carried out as in Example 1 using phthalic anhydride and N,N-dimethylphenylene diamine (Dmphen) (1 : 1 plus 4 % excess mol ratio) in chloroform. A fine precipitate formed after half of the amine was added. The solution was stirred for one hour at room temperature and filtered immediately to give a green solid. This was recrystallized in ethanol and treated with decolorizing charcoal to yield pale yellow crystals. The product began to shrink at 153¤C and turned bright yellow from 157-163¤C. Shrinking continued as the temperature increased until a clear orange melt occurred at 258¤C.

Example 7

Dimethylaminopropylamine-cylcohexane dicarboxylic acid anhydride adduct.

The synthesis was carried out as in Example 1 using cis-1,2-cyclohexanedicarboxylic anhydride (CHA) and dimethylaminopropylamine (1 : 1 plus 4 % excess mol ratio) in acetonitrile. A precipitate formed after the solution was left overnight in the refrigerator and the flask scratched. The product became shiny and shrank at 117¤C and a clear melt occurred from 124-128¤C.

Example 8

Dimethylaminopropylamine-phthalic anhydride adduct.

The synthesis was carried out as in Example 1 using phthalic anhydride and dimethylaminopropylamine (1 : 2 plus 4 % excess mol ratio). A precipitate did not form and could not be obtained by chilling,

scratching the flask, or seeding with product.

Examples I-II and Comparative Examples A-B

Powder Coatings

Four powder coatings were prepared using a commercially available type of carboxyl terminated polyester resin (Uralac P 3500 -DSM Resins) with an acid value of 33 and a glass transition temperature of 58¤C, epoxy resin as a crosslinker (Araldit GT 7004 -Ciba-Geigy) with an epoxy equivalent weight of 725 and titanium dioxide as a pigment (Kronos RN 59 - Kronos Titan GMbH). The coatings I and II were catalysed with amic acid adducts based on phthalic acid anhydride and N,N-dimethyl-1-diaminopropane (DMAP), N,N-diethyl-1,3-diaminopropane (DEAP). Coating A was catalysed with imidazole, a catalyst commonly used in practice whereas coating B was catalysed without a catalyst.

Their compositions are given in the following table in parts by weight.

TABLE 1

| | POWDER COATING | | | |
|---|---|---|---|---|
| | I | II | A | B |
| Uralac P 3500 | 700 | 700 | 700 | 700 |
| Araldit GT 7004 | 300 | 300 | 300 | 300 |
| Kronos RN 59 | 500 | 500 | 500 | 500 |
| DMAP | 10 | - | - | - |
| DEAP | - | 10 | - | - |
| imidazole | - | - | 10 | - |

The preparation of the powder coatings was done by extrusion at 110¤C, using a lab extruder BUSS-Ko-Kneader PR 46 followed by milling and sieving operation in order to exclude powder particles bigger than 50 microns. The coatings where applied by an electrostatic spray method using a GEMA manual spray gun type HP720 on 0,9 mm steel panels protected with zinc phosphate (Bonder 130) in a thickness of approximately 50 microns. The stoving was done at 200¤C for 10 minutes in an air-circulated oven. In order to compare the catalytic activity of the different catalysts the curing of the coating was followed by differential scanning calorimetry using DSC-30 Metler apparatus with a heating rate of 20¤C/minute. The temperature of onset cure ($T_o$), the peak temperature ($T_p$) and the temperature of the end of the curing process ($T_e$) are given in table 2 together with the properties of the cured films. It is quite clear that DMAP and DEAP show latency in comparison with the imidazole. Coating B has no good mechanical properties due to the very slow and incomplete curing, it was furthermore very difficult to determine, $T_o$, $T_p$ and $T_e$ in the non catalysed system.

TABLE 2

| | POWDER COATING | | | |
|---|---|---|---|---|
| | I | II | A | B |
| Pencil hardness (ISO 2815) | F | F | F | F |
| Reverse Impact (inch/pound) (Gardner, 5/8 inch ball) | 160 | 160 | 160 | none |
| Slow penetration (Ericsen) (in mm) | 8 | 8 | 8 | 1 |
| $T_{onset}$ | 142 | 154 | 110 | difficult to be noticed |
| $T_{peak}$ | 182 | 196 | 150 | no clear peak |
| $T_{end}$ | 218 | 233 | 200 | difficult to be noticed |
| Film appearance | smooth surface | smooth surface | emphasized orange peel effect | smooth surface |

Due to the latent behavior of the anioc acid catalyst and the postponed Tonset cure there is longer time available for flow at the coating after melting in comparison with the imidazol catalysed system. The result is a coating surface with smooth glossy appearance in contrast to the emphasized orange peel effect in the case of imidazol catalysed system.

The other latent catalysts showed similar behaviour as DMAP and DEAP.

## Claims

1. Powder coating composition comprising epoxy resin, acid groups containing polyester and a catalyst, characterized in that the catalyst is a latent catalyst with formula (1)

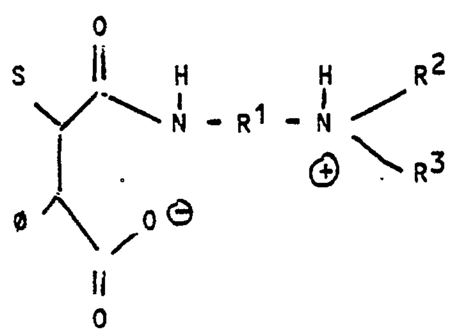

(1)

in which:
R' = $C_1$-$C_{10}$ alkyl or aryl
$R^2$ and $R^3$ are the same or different $C_1$-$C_6$ alkyl, $C_6$-$C_8$ aryl or $R^2$ and $R^3$ form together a 4-8 membered carbon ring
in which:
R', $R^2$ and/or $R^3$ can contain an ether-oxygen or sulphur atom and
in which:
S and ø are hydrogen or an aliphatic or an aromatic group.

2. Powder coating composition comprising epoxy resin, acid groups containing polyester and a catalyst characterized in that the catalyst is a catalyst with formula (2)

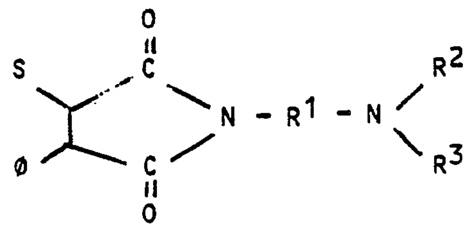

(2)

in which:
$R^1$ = $C_1$-$C_{10}$ alkyl or aryl
$R^2$ and $R^3$ are the same or different $C_1$-$C_6$ alkyl, $C_6$-$C_8$ aryl or $R^2$ and $R^3$ form together a 4-8 membered carbon ring
in which:
$R^1$, $R^2$ and/or $R^3$ can contain an ether-oxygen or sulphur atom and in which:
S and ø are hydrogen or an aliphatic or an aromatic group.

3. Powder coating composition according to claim 1 or 2, characterized in that $R^1$ is a $C_2$-$C_4$ alkyl or fenyl group.

4. Powder coating composition according to claim 1 or 2, characterized in that $R^2$ and $R^3$ are $C_1$-$C_4$ alkyl or form together a 5 of 6 membered ring.

5. Powder coating composition according to any one of claims 1-4, characterized in that the polyester has an acid number between 10-100 mg KOH/g polyester.

6. Powder coating composition according to any one of claims 1-5, characterized in that the epoxy resin is a bisphenol-A based epoxy, diglycidylterephtalate or triglycidyl isocyanurate.